# EUROPÄISCHE PATENTSCHRIFT

(11) **EP 3 683 183 B1**
(45) Veröffentlichungstag und Bekanntmachung des Hinweises auf die Patenterteilung: **07.06.2023**
(21) Anmeldenummer: 20150862.9
(22) Anmeldetag: 09.01.2020
(51) Int. Cl.: B66F 9/24, B66F 9/075, B66F 9/06, G05D 1/02

(54) **VERFAHREN ZUM BETREIBEN EINES FLURFÖRDERZEUGS SOWIE FLURFÖRDERZEUG UND INTRALOGISTISCHES SYSTEM**
METHOD FOR OPERATING AN INDUSTRIAL TRUCK AND AN INDUSTRIAL TRUCK AND INTRALOGISTICS SYSTEM
PROCÉDÉ DE FONCTIONNEMENT D'UN CHARIOT DE MANUTENTION AINSI QUE CHARIOT DE MANUTENTION ET SYSTÈME INTRALOGISTIQUE

(30) Priorität: 14.01.2019 DE 102019100763
(43) Veröffentlichungstag der Anmeldung: 22.07.2020
(73) Patentinhaber: STILL GmbH, 22113 Hamburg (DE)
(72) Erfinder: Kwiatkowski, Andreas, 22083 Hamburg (DE)
(74) Vertreter: Patentship Patentanwaltgesellschaft

(56) Entgegenhaltungen:
- GB-A- 2 319 378
- JP-A- 2005 250 950
- US-A- 4 318 098
- US-A- 5 938 710
- US-A1- 2005 263 598
- US-A1- 2007 225 906
- US-A1- 2018 113 466

## Beschreibung

Die Erfindung betrifft ein Verfahren zum Betreiben eines Flurförderzeugs mit mindestens einem optischen Sensor zur Erkennung von Informationen im Betriebsbereich des Flurförderzeugs und einer Datenverarbeitungseinrichtung zur Auswertung dieser Informationen und zur Erstellung von situationsgerechten Handlungsanweisungen und/oder Steuerungsbefehlen für den Betrieb des Flurförderzeugs, wobei der optische Sensor mindestens eine im Betriebsbereich des Flurförderzeugs angebrachte Markierung erfasst, welche die mit definierten Nachrichten an das Flurförderzeug codierten Informationen enthält, und die Datenverarbeitungseinrichtung durch Auswertung dieser Nachrichten die Handlungsanweisungen und/oder Steuerungsbefehle erstellt.

Unter einem intralogistischen System versteht man ein System, bei dem logistische Material- und Warenflüsse innerhalb eines Betriebsgeländes abgewickelt werden. Mit diesem Begriff wird eine Abgrenzung zum Warentransport außerhalb eines Werkes, z.B. durch eine Spedition, erreicht. Intralogistische Systeme umfassen insbesondere Geräte zur Lager- und Fördertechnik, Hebezeuge, Flurförderzeuge, Kommissioniergeräte, Palettiergeräte, Verpackungsgeräte sowie lagerhallenspezifische Einrichtungen, wie z.B. automatische Tore. Solche Geräte und Einrichtungen bilden die technischen Prozessteilnehmer des intralogistischen Systems. Außerdem gehören zu diesem intralogistischen System auch prozessteilnehmende Betriebspersonen, z.B. Bedienpersonen von Flurförderzeugen, Lagermitarbeiter und Lagerleiter.

Beim Betrieb von Flurförderzeugen in einem intralogistischen System kommen häufig Assistenzsysteme zum Einsatz, die eine Bedienung des Flurförderzeugs erleichtern sollen oder sogar einen automatisierten oder teilautomatisierten Betrieb ermöglichen sollen. Da Flurförderzeuge meistens in definierten Betriebsbereichen, z.B. in Warenlagern, eingesetzt werden, können hierfür ortsbezogene Assistenzsysteme genutzt werden. Dabei werden im Warenlager beispielsweise Zeichen, Linien und Schilder oder auch Barcodes und Funkstationen zur Übermittlung von Identifikationssignalen (Funkbeacons) angebracht. Diese Informationen sind aber nur abrufbar, wenn sie in ein Managementsystem für den Betrieb des Flurförderzeugs eingetragen werden. Das Flurförderzeug kann über einen Sensor, z.B. einen optischen Sensor, diese Informationen erfassen und mittels einer Datenverarbeitungseinrichtung mit den Eintragungen im Managementsystem vergleichen. Auf diese Weise ist eine erleichterte manuelle oder automatische Navigation des Flurförderzeugs im Warenlager möglich.

Beispielsweise ist in der EP 2 711 880 A1 ein fahrerloses Transportsystem beschrieben, bei dem Markierungen, z.B. Reflexionselemente, eingesetzt werden, die mittels optischer Sensoren, insbesondere Lasersensoren, gut abgetastet werden können. Diese Markierungen werden genutzt, um eine Navigation im Warenlager zu ermöglichen. Hierzu werden die Koordinaten des Warenlagers als Referenzdaten in der Datenverarbeitungseinrichtung hinterlegt. Die Transportfahrzeuge erkennen die Markierungen und führen einen Abgleich der aktuellen Koordinaten (Ist-Position) des Transportfahrzeuges mit den in der Datenverarbeitungseinrichtung hinterlegten Referenzdaten des Warenlagers durch. So können die Transportfahrzeuge automatisch zu einer Zielposition (Soll-Position) für die Kommissionierung der nächsten Ware verfahren werden. Als Markierungen können auch Barcodes oder Quick-Response-Codes (QR-Codes) eingesetzt werden, die von einer optosensorische Erfassungseinheit, beispielsweise einer Kamera, erfasst werden können.

Kameras werden heute in Flurförderzeugen vornehmlich dazu genutzt, Bilder von schwer einsehbaren Bereichen des Flurförderzeugs anzuzeigen. So sind Kameras für die Rückraumüberwachung oder Kameras in Gabelnähe verbreitet, die den Fahrer dabei unterstützen sollen, in hohen Arbeitshöhen zu arbeiten. Seit einiger Zeit werden fahrzeuggebundene Kameras auch dazu verwendet, mittels Bildverarbeitung umgebende Personen zu erkennen oder Barcodes an Waren automatisiert zu scannen.

Ein stark wachsender Markt im Bereich der Intralogistik bedient den Wunsch nach Arbeitssicherheit und Unfallvermeidung. Dafür werden verschiedene technische Systeme angeboten, die Gefahrenbereiche entschärfen sollen, indem beim Einfahren in diesen Bereich Fahrzeugreaktionen ausgelöst werden. Beispiele sind Deckensensoren, die in die Geschwindigkeit des Fahrzeugs eingreifen, je nachdem, ob das Fahrzeug sich innerhalb oder außerhalb von Gebäuden bewegt, oder Tor- oder Kreuzungsüberwachungen, die vor diesen Unfallschwerpunkten sich annähernde Flurförderzeuge auf eine verringerte Geschwindigkeit herunterbremsen. Diese Systeme nutzen typischer Weise Funktechnologien wie WLAN, RFID und UWB oder Infrarottechnologie.

Die etablierten und bekannten Sicherheitssysteme haben gemeinsam, dass die Bereiche, in denen eine Fahrzeugreaktion ausgelöst werden soll, mit einem stationären Sender/Empfänger ausgerüstet werden. Diese stationären Sender/Empfänger interagieren mit weiteren Sendern/Empfängern an den Flurförderzeugen, wenn diese in den Bereich einfahren, in dem die stationären Sender/Empfänger angeordnet sind. So wird beispielsweise an einer Tordurchfahrt ein Funksender montiert und an einem Flurförderzeug ein Funkempfänger. Bei Annäherung kommunizieren diese "Teilnehmer" miteinander und übermitteln dem Flurförderzeug eine Botschaft.

Der Nachteil dieser Lösungen liegt darin, dass sie eine hohe initiale Investition bedeuten und unflexibel sind, weil sie in die Infrastruktur des Betreibers eines intralogistischen Systems eingreifen und die stationären Komponenten typischer Weise teuer sind.

Die hohen initialen Investitionen sind folgendermaßen begründet:
Die stationären Komponenten (Sender/Empfänger) sind in etwa genauso teuer wie die mobilen Komponenten (Sender/Empfänger). Zudem werden gegebenenfalls sehr viele stationäre Komponenten (Sender/Empfänger) benötigt, wenn - auch nur für ein Flurförderzeug - verschiedene Bereiche wie Tore, Kreuzungen, Fußgängerüberwege etc. eine Fahrzeugreaktion auslösen sollen.

Darüber hinaus müssen diese stationären Komponenten (Sender/Empfänger) auch an ein Stromnetz angeschlossen werden, was nicht in jeder Hallenstruktur einfach ist und bei Nutzung im Außenbereich hohe Installationskosten mit sich bringen kann.

Die mangelnde Flexibilität ergibt sich aus den folgenden Gründen:
Die bestehenden Systeme sind propriätar, so dass ein Betreiber sich mit einer gekauften Lösung an den gewählten Hersteller bindet. Ein Betreiber, der beispielsweise 10 Tore und 5 Flurförderzeuge für einen mittleren fünfstelligen Euro-Betrag hat ausrüsten lassen, wird weder fahrzeugseitig noch stationär ein anderes System mehr nutzen. Das führt jedoch dazu, dass Betreiber zurückhaltend sind, diese Lösungen großflächig einzusetzen.

Zudem kann der Betreiber typischer Weise selbst keine Änderungen an dem System vornehmen. Die Sender und Empfänger werden bei der Installation des Systems konfiguriert. Änderungen können nur von geschulten Mitarbeitern des Systemanbieters oder des Fahrzeuglieferanten vorgenommen werden. Einfache und schnelle Änderungen oder Erweiterungen sind somit für den Betreiber nicht möglich.

Die GB 2 319 378 A offenbart ein gattungsgemäßes Verfahren und ein gattungsgemäßes intralogistisches System, bei dem ein Flurförderzeug mittels einer Kamera als Schilder ausgebildete Markierungen erkannt und anhand der Informationen auf den Schildern entsprechende Handlungen durchgeführt. Das Dokument offenbart keinen Schritt zum Ändern der Nachrichten an der Markierung, und offenbart auch keine Markierung, die Informationen mit mehreren Nachrichten enthält.

Die US 5 938 710 A offenbart ein automatisiert betriebenes Flurförderzeug, das mittels einer Navigationskamera, die Markierungen erfasst, in der Umgebung navigiert.

Die JP 2005 250950 A offenbart ein von einem Benutzer getragenes Terminal zur Markerpräsentation anstelle eines gedruckten Markers. Beim Zusammenstellen eines virtuellen Objektbildes in einem fotografierten Bild zeigt das tragbare Terminal zur Markierungspräsentation einem Bild einen Marker zur dreidimensionalen Positionserkennung an, bei dem das virtuelle Objektbild zusammengesetzt ist.

Der vorliegenden Erfindung liegt die Aufgabe zugrunde, ein Verfahren der eingangs genannten Art sowie ein Flurförderzeug zur Durchführung des Verfahrens und ein intralogistisches System mit mindestens einem derartigen Flurförderzeug so auszugestalten, dass mit geringem technischen Aufwand flexibel auf veränderte Betriebsbedingungen reagiert werden kann.

Diese Aufgabe wird verfahrensseitig erfindungsgemäß dadurch gelöst, dass die Nachrichten von einer Betriebsperson und/oder einem Steuerungssystem aktiv veränderbar sind, wobei zur Veränderung der Nachrichten die Markierung umgeschaltet oder verändert wird, indem Nachrichten von einer Betriebsperson manuell an der Markierung verändert werden oder die Nachrichten von einer zentralen Steuerungseinheit verändert werden.

Zur Veränderung der Nachrichten kann die Markierung auf verschiedene Weise umgeschaltet bzw. verändert werden. Im einfachsten Fall werden die Nachrichten von einer Betriebsperson manuell, beispielsweise mittels Betätigung eines Hebels oder eines Tasters, an der Markierung verändert. In einer Alternativen der Erfindung werden die Nachrichten von einer zentralen Steuerungseinheit verändert. Die zentrale Steuerungseinheit kann dabei über eine Funkverbindung oder eine direkte elektrische Signalübertragung mit der Markierung kommunizieren. Auf diese Weise wird auch eine automatische Beeinflussung der Fahrzeugsteuerung des Flurförderzeugs durch die zentrale Steuerungseinheit ermöglicht.

Dabei liegt der Erfindung die Überlegung zu Grunde, dem Flurförderzeug aus einer Entfernung gezielt Nachrichten, insbesondere Anweisungen und/oder Steuerungsbefehle und/oder Warnmeldungen zu übermitteln, ohne dass eine feste Datenübertragungsstrecke, z.B. eine Funkübertragung, aufgebaut werden muss. Dies wird durch einen, am Flurförderzeug angeordneten, optischen Sensor in Verbindung mit veränderbaren Markierungen in der Betriebsumgebung des Flurförderzeugs ermöglicht. Durch gezielte Veränderungen der Markierungen können unterschiedliche Nachrichten erzeugt werden, die vom optischen Sensor erfasst werden. Die Datenverarbeitungseinrichtung wertet diese Nachrichten aus und erstellt daraus bestimmte Handlungsanweisungen und/oder Steuerungsbefehle für das Flurförderzeug.

Zweckmäßigerweise wird als optischer Sensor eine Kamera verwendet. Hierzu können eine oder mehrere Kamerasysteme an geeigneten Stellen am Fahrzeug verbaut werden. Die Datenverarbeitung basiert in diesem Fall darauf, mittels eines Bildverarbeitungssystems spezifische Merkmale der Markierungen in der Umgebung zu erkennen, um dann über die Fahrzeugsteuerung Fahrzeugreaktionen auszulösen. Die Kamera nimmt also die Umgebung auf und das Bildverarbeitungssystem erkennt die vordefinierten Merkmale. Die Bildverarbeitung kann in der Kamera, in einem zusätzlichen Gerät oder in der Fahrzeugsteuerung des Flurförderzeugs ausgeführt werden. Erkennt das Bildverarbeitungssystem ein Merkmal, wird die Information an die Fahrzeugsteuerung übermittelt, die die Fahrzeugreaktion initiiert oder ausführt. Dabei können verschiedene Merkmale unterschiedliche Informationen vermitteln und unterschiedliche Fahrzeugreaktionen auslösen.

Um unbeabsichtigte Fahreingriffe zu vermeiden, kann das Bildverarbeitungssystem vorzugsweise aus den Bilddaten einen Abstand zu dem Merkmal ermitteln und für unterschiedliche Abstände unterschiedliche Fahrzeugreaktionen auslösen.

Außerdem kann das Bildverarbeitungssystem zweckmäßigerweise aus Bilddaten und Fahrzeugdaten ermitteln, ob auf einen Bereich direkt zugefahren wird oder ob dieser nur passiert wird.

Von Vorteil ist es auch, wenn Zustandsinformationen aus dem Fahrzeug mit den Informationen aus dem Kamerasystem kombiniert werden. Beispielsweise könnte auf eine Merkmalsinformation "Durchfahrtshöhe 2,5 m" nur reagiert werden, wenn die Fahrzeugsensorik ermittelt hat, dass die Fahrzeughöhe kritisch ist.

Die Erfindung kann als zusätzliche Mensch-Maschine-Schnittstelle fungieren, indem spezielle Merkmale von einer Bedienperson mittels einer Markierung, beispielsweise durch Hochhalten eines Schildes, gezeigt werden, um damit Fahrzeugreaktionen auszulösen oder Fahrzeugparameter umzustellen.

Somit könnte beispielsweise ein Fuhrparkleiter die Maximalgeschwindigkeit für ein Fahrzeug parametrieren, indem er dem Fahrzeug die "5 km/h - Karte" zeigt.

Die Erfindung kann auch als Zugangssystem genutzt werden, bei dem sich jeder autorisierte Fahrer mit individuellen Markierungen und somit Merkmalen, die ihm speziell zugeordnet sind, beim Fahrzeug anmeldet.

Vorzugsweise sind die Nachrichten durch mechanische Beeinflussung der Markierung veränderbar oder schaltbar.

Hierzu kann im einfachsten Fall als Markierung ein wendbares Anzeigeschild verwendet werden, das auf seiner Vorder- und Rückseite mit unterschiedlichen Nachrichten codiert ist. Die unterschiedlichen Nachrichten lassen sich somit in einfacher Weise durch Wenden des Anzeigeschildes umschalten.

Eine andere Möglichkeit besteht darin, dass als Markierung eine Anzeigetafel mit mechanisch klappbaren Anzeigeelementen verwendet wird. Derartige Anzeigetafeln sind an sich beispielsweise als Terminalanzeigen in Flughäfen bekannt.

Alternativ kann als Markierung auch eine Anzeigetafel mit auf Folien aufgedruckten Nachrichten verwendet werden, wobei Folien mit unterschiedlichen Nachrichten mechanisch auswählbar sind. Solche Anzeigetafeln kennt man an sich aus der Außenwerbung, wie sie häufig an öffentlichen Straßen und Plätzen zum Einsatz kommt.

Eine vorteilhafte Variante besteht darin, dass die Nachrichten durch elektronische Beeinflussung der Markierung veränderbar oder schaltbar sind.

Hierzu kann als Markierung ein Monitor oder Fernseher verwendet werden, auf dem die unterschiedlichen Nachrichten elektronisch darstellbar sind.

Alternativ kann als Markierung auch ein von einem Lichtprojektor erzeugtes Projektionsbild verwendet werden, auf dem die unterschiedlichen Nachrichten elektronisch darstellbar sind. Dies hat den Vorteil, dass die Nachrichten an eine beliebige Stelle in der Betriebsumgebung des Flurförderzeugs projeziert werden können, und die Stelle des Projektionsbildes auch ohne großen Aufwand veränderbar ist.

Eine technisch besonders elegante Möglichkeit besteht darin, als Markierung eine Leuchtdioden-Matrixanzeige zu verwenden, auf der die unterschiedlichen Nachrichten durch gezieltes Ansteuern einzelner Leuchtdioden darstellbar sind.

Eine bevorzugte Ausgestaltung sieht vor, dass die Nachrichten mittels einer Fernsteuerung verändert werden. Dabei kann die Fernsteuerung beispielsweise mittels einer Funkfernsteuerung, per WLAN oder einer Infrarotfernsteuerung erfolgen. Hierzu kann sich eine Betriebsperson in näherer Umgebung des Flurförderzeugs befinden, die die Fernsteuerung bedient.

Gemäß einer Weiterbildung des Erfindungsgedankens enthält die Markierung Informationen, welche von Betriebspersonen nicht wahrnehmbar oder erkennbar sind. Dadurch wird erreicht, dass die Betriebspersonen nicht gestört und abgelenkt werden. Somit wird verhindert, dass die Markierungen bewusst vermieden oder umfahren werden.

Vorzugsweise nutzen die Informationen dabei eine für den Menschen unsichtbare elektromagnetische Strahlung mit Wellenlängen, die kürzer oder länger als die des sichtbaren Lichts sind. Hierzu gehören Ultraviolettstrahlung und Infrarotstrahlung.

Zusätzlich oder alternativ können die Informationen auch außerhalb des zeitlichen Auflösungsvermögens des menschlichen Auges liegende Wechselfrequenzen nutzen. Hierzu kann die Umschaltung zwischen den verschiedenen Nachrichten so schnell erfolgen, dass das menschliche Auge die Umschaltungen nicht auflöst.

Um die Zuverlässigkeit zu erhöhen, weisen die mit den definierten Nachrichten codierten Informationen bevorzugt eine Abfolge von Bildinformationen auf. Ein bestimmter Steuerungsbefehl ist also beispielsweise in einer Abfolge von Bildinformationen codiert. Bei einer Leuchtdioden-Matrixanzeige könnte zum Beispiel die Abfolge von verschiedenen Mustern einen Fahrbefehl beschreiben.

Der optische Sensor ist bevorzugt als Kamera ausgebildet. Eine monoculare Kamera genügt für den Zweck der Erfindung. Sofern weitergehende Navigations- und Assistenzaufgaben gewünscht sind, kann die Kamera auch als Stereokamera ausgebildet sein, die ein räumliches Sehen erlaubt.

Um eine optimale Übersicht zu gewährleisten, ist der optische Sensor vorzugsweise im oberen Drittel der Höhe des Flurförderzeugs angeordnet.

Hierzu ist der optische Sensor zweckmäßigerweise an einem Hubmast des Flurförderzeugs angeordnet.

Alternativ oder zusätzlich kann der optische Sensor an einer Dachkonstruktion des Flurförderzeugs angeordnet sein. Beispielsweise kann der optische Sensor an einem Fahrerschutzdach angebracht sein.

Der bzw. die optischen Sensoren können nach vorn, nach hinten oder nach oben ausgerichtet sein, um in diesen Richtungen angeordnete Markierungen erfassen zu können. Um einen besonders großen Bereich erfassen zu können, ist der optische Sensor vorzugsweise in einer horizontalen und/oder vertikalen Ebene schwenkbar ausgebildet.

Um eine besonders kompakte Bauausführung zu ermöglichen, umfasst die Datenverarbeitungseinrichtung bevorzugt eine in den optischen Sensor integrierte Bildverarbeitungseinrichtung.

Besondere Vorteile ergeben sich gemäß einer Ausgestaltung der Erfindung, bei der das Flurförderzeug als autonomes Flurförderzeug mit automatischer Navigationseinrichtung ausgebildet ist. In diesem Fall wird ein vollautomatischer Betrieb des Flurförderzeugs ermöglicht, bei dem situationsbezogene Steuerbefehle mittels der veränderbaren Markierungen erteilt werden können.

Die Erfindung betrifft ferner ein intralogistisches System mit mindestens einem Flurförderzeug, das mit mindestens einem optischen Sensor zur Erkennung von Informationen im Betriebsbereich des Flurförderzeugs und einer Datenverarbeitungseinrichtung zur Auswertung dieser Informationen und zur Erstellung von situationsgerechten Handlungsanweisungen und/oder Steuerungsbefehlen für den Betrieb des Flurförderzeugs versehen ist, wobei das intralogistische System mindestens eine im Betriebsbereich des Flurförderzeugs angebrachte Markierung umfasst, welche die mit definierten Nachrichten an das Flurförderzeug codierten Informationen enthält, und die Datenverarbeitungseinrichtung dazu eingerichtet ist, durch Auswertung dieser Nachrichten die Handlungsanweisungen und/oder Steuerungsbefehle zu erstellen.

Bei einem derartigen intralogistischen System wird die gestellte Aufgabe dadurch gelöst, dass die Markierung derart ausgebildet ist, dass die Nachrichten von einer Betriebsperson und/oder einem Steuerungssystem aktiv veränderbar sind, wobei zur Veränderung der Nachrichten die Markierung umgeschaltet oder verändert wird, indem Nachrichten von einer Betriebsperson manuell an der Markierung verändert werden oder die Nachrichten von einer zentralen Steuerungseinheit verändert werden.

Dabei umfasst das intralogistische System vorzugsweise eine, mit der Markierung in Wirkverbindung stehende, zentrale Steuerungseinheit, in der die Nachrichten erzeugt werden. Auf diese Weise kann beispielsweise der Betrieb mehrerer Flurförderzeuge im intralogistischen System zentral gesteuert werden.

Die Markierung ist zweckmäßigerweise auf einem Fahrboden und/oder an mindestens einer Wand und/oder an mindestens einem Tor und/oder an mindestens einem Pfosten und/oder an mindestens einer Decke in der Betriebsumgebung des Flurförderzeugs angeordnet.

Die Erfindung bietet eine ganze Reihe von Vorteilen:
Im intralogistischen System ist nur ein kleiner und kostengünstiger Struktureingriff erforderlich. Der Betreiber muss nur kostengünstige Markierungen in Form von Boden-, Wand- oder Deckenmarkierungen oder in Form von Schildern anbringen. Es müssen keine teuren stationären Sender/Empfänger-Einheiten verbaut werden. Es wird keine Energieversorgung benötigt. Die Einheiten müssen nicht konfiguriert werden.

Außerdem ermöglicht die Erfindung eine einfache Parametrierung/Konfiguration durch den Betreiber. Dadurch, dass die Merkmale beim Betreiber eine vordefinierte Bedeutung haben, kann der Betreiber auch sehr einfach Änderungen vornehmen und das System ergänzen. In den bekannten Systemen muss ein Techniker vom Systemanbieter oder Fahrzeughersteller Änderungen mit einem speziellen Softwaretool vornehmen, während bei der erfindungsgemäßen Lösung der Betreiber zum Beispiel einfach Schilder auf- und abhängen kann.

Schließlich ist auch eine Mehrfachnutzung der Kameras möglich. Die Kameras und Auswertesysteme können beispielsweise durch Displays ergänzt werden, so dass dieselbe Ausstattung auch genutzt werden kann, um Monitoringaufgaben (z.B. Rückraumüberwachung, Lastüberwachung etc.) zu leisten.

Weitere Vorteile und Einzelheiten der Erfindung werden anhand der in den schematischen Figuren dargestellten Ausführungsbeispiele näher erläutert. Hierbei zeigen
- Figur 1: ein Flurförderzeug mit Kamerasystem und
- Figur 2: verschiedene Beispiele für Markierungen.

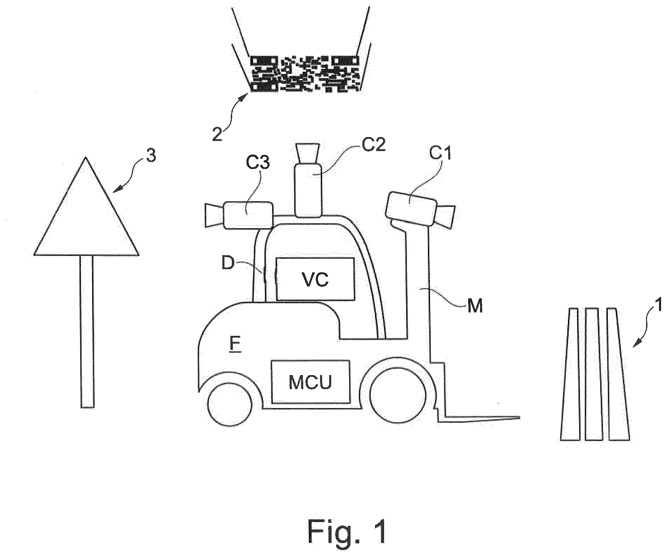

In der Figur 1 ist ein beispielsweise als Gegengewichtsgabelstapler ausgebildetes Flurförderzeug F gezeigt, an dem an mehreren Positionen als Kameras C1, C2 und C3 ausgebildete optische Sensoren C1, C2, C3 montiert sind. Die Kamera C1 ist am Hubmast M angebracht und in Fahrtrichtung des Flurförderzeugs F nach vorne ausgerichtet, während die Kameras C2 und C3 an der als Fahrerschutzdach D ausgebildeten Dachkonstruktion D angeordnet sind und nach oben bzw. nach hinten ausgerichtet sind.

In der Betriebsumgebung des Flurförderzeugs F sind definierte Markierungen 1, 2, 3 angebracht. Dabei ist die Markierung 1 am Boden angebracht, beispielsweise aufgemalt, während die Markierung 2 an der Decke montiert bzw. abgehängt ist und die Markierung 3 aufrecht an einer Wand oder an einem Tor oder an einem Pfosten angebracht befestigt ist.

Die Markierungen enthalten mit definierten Nachrichten an das Flurförderzeug F codierten Informationen.

Die Kameras C1, C2, C3 nehmen die Umgebung auf und eine Bildverarbeitungseinrichtung VC (Video Controller) umfassende Datenverarbeitungseinrichtung VC wertet die Merkmale der Markierungen 1, 2, 3 aus und erkennt somit die mit einer definierten Nachricht an das Flurförderzeug F codierten Informationen. Erkennt die Bildverarbeitungseinrichtung VC aus einer Markierung 1, 2, 3 deren darin codierte vordefinierte Nachricht, erstellt die Datenverarbeitungseinrichtung VC zu dieser Nachricht gehörende Handlungsanweisungen und/oder Steuerungsbefehle, die an die Fahrzeugsteuerung MCU übermittelt werden, die die zu den Handlungsanweisungen und/oder Steuerungsbefehle gehörende Fahrzeugreaktion initiiert oder ausführt.

Dabei können verschiedene Markierungen unterschiedliche Informationen vermitteln und unterschiedliche Fahrzeugreaktionen auslösen.

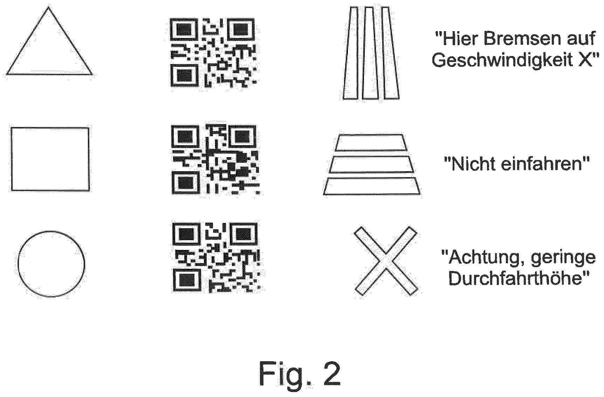

Die Figur 2 zeigt einige Beispiele, in denen spezifische Markierungen darin codierte vordefinierte Nachrichten transportieren und damit unterschiedliche Fahrzeugreaktionen hervorrufen. Die obere Reihe von Markierungen geben auf unterschiedliche Weise die Nachricht "Hier bremsen auf Geschwindigkeit x" wieder. Die Markierungen der mittleren Reihe geben die vordefinierte Nachricht "Nicht einfahren" wieder. In den Markierungen der unteren Reihe sind die vordefinierte Nachricht "Achtung, geringe Durchfahrthöhe" codiert.

## Patentansprüche

1. Verfahren zum Betreiben eines Flurförderzeugs (F) mit mindestens einem optischen Sensor (C1, C2, C3) zur Erkennung von Informationen im Betriebsbereich des Flurförderzeugs (F) und einer Datenverarbeitungseinrichtung (VC) zur Auswertung dieser Informationen und zur Erstellung von situationsgerechten Handlungsanweisungen und/oder Steuerungsbefehlen für den Betrieb des Flurförderzeugs (F), wobei der optische Sensor (C1, C2, C3) mindestens eine im Betriebsbereich des Flurförderzeugs (F) angebrachte Markierung (1, 2, 3) erfasst, welche die mit definierten Nachrichten an das Flurförderzeug (F) codierten Informationen enthält, und die Datenverarbeitungseinrichtung (VC) durch Auswertung dieser Nachrichten die Handlungsanweisungen und/oder Steuerungsbefehle erstellt, wobei die Nachrichten von einer Betriebsperson und/oder einem Steuerungssystem aktiv veränderbar sind, wobei zur Veränderung der Nachrichten die Markierung (1, 2, 3) umgeschaltet oder verändert wird, indem Nachrichten von einer Betriebsperson manuell an der Markierung (1, 2, 3) verändert werden oder die Nachrichten von einer zentralen Steuerungseinheit verändert werden.

2. Verfahren nach Anspruch 1, **dadurch gekennzeichnet, dass** als optischer Sensor (C1, C2, C3) eine Kamera (C1, C2, C3) verwendet wird.

3. Verfahren nach Anspruch 1 oder 2, **dadurch gekennzeichnet, dass** die Nachrichten durch mechanische Beeinflussung der Markierung (1, 2, 3) veränderbar sind.

4. Verfahren nach Anspruch 3, **dadurch gekennzeichnet, dass** als Markierung (1, 2, 3) ein wendbares Anzeigeschild verwendet wird, das auf seiner Vorder- und Rückseite mit unterschiedlichen Nachrichten codiert ist.

5. Verfahren nach Anspruch 3, **dadurch gekennzeichnet, dass** als Markierung (1, 2, 3) eine Anzeigetafel mit mechanisch klappbaren Anzeigeelementen verwendet wird.

6. Verfahren nach Anspruch 3, **dadurch gekennzeichnet, dass** als Markierung (1, 2, 3) eine Anzeigetafel mit auf Folien aufgedruckten Nachrichten verwendet wird, wobei Folien mit unterschiedlichen Nachrichten mechanisch auswählbar sind.

7. Verfahren nach Anspruch 1 oder 2, **dadurch gekennzeichnet, dass** die Nachrichten durch elektronische Beeinflussung der Markierung (1, 2, 3) veränderbar sind.

8. Verfahren nach Anspruch 7, **dadurch gekennzeichnet, dass** als Markierung (1, 2, 3) ein Monitor verwendet wird, auf dem die unterschiedlichen Nachrichten elektronisch darstellbar sind.

9. Verfahren nach Anspruch 7, **dadurch gekennzeichnet, dass** als Markierung (1, 2, 3) ein von einem Lichtprojektor erzeugtes Projektionsbild verwendet wird, auf dem die unterschiedlichen Nachrichten elektronisch darstellbar sind.

10. Verfahren nach Anspruch 7, **dadurch gekennzeichnet, dass** als Markierung (1, 2, 3) eine Leuchtdioden-Matrixanzeige verwendet wird, auf der die unterschiedlichen Nachrichten durch gezieltes Ansteuern einzelner Leuchtdioden darstellbar sind.

11. Verfahren nach einem der Ansprüche 1 bis 10, **dadurch gekennzeichnet, dass** die Nachrichten mittels einer Fernsteuerung verändert werden.

12. Verfahren nach einem der Ansprüche 1 bis 11, **dadurch gekennzeichnet, dass** die Markierung (1, 2, 3) Informationen enthält, welche von Betriebspersonen nicht wahrnehmbar sind.

13. Verfahren nach Anspruch 12, **dadurch gekennzeichnet, dass** die Informationen eine für den Menschen unsichtbare elektromagnetische Strahlung mit Wellenlängen, die kürzer oder länger als die des sichtbaren Lichts sind, nutzen.

14. Verfahren nach Anspruch 12 oder 13, **dadurch gekennzeichnet, dass** die Informationen außerhalb des zeitlichen Auflösungsvermögens des menschlichen Auges liegende Wechselfrequenzen nutzen.

15. Verfahren nach einem der Ansprüche 1 bis 14, **dadurch gekennzeichnet, dass** die mit den definierten Nachrichten codierten Informationen eine Abfolge von Bildinformationen aufweisen.

16. Intralogistisches System mit mindestens einem Flurförderzeug (F), das mit mindestens einem optischen Sensor (C1, C2, C3) zur Erkennung von Informationen im Betriebsbereich des Flurförderzeugs (F) und einer Datenverarbeitungseinrichtung (VC) zur Auswertung dieser Informationen und zur Erstellung von situationsgerechten Handlungsanweisungen und/oder Steuerungsbefehlen für den Betrieb des Flurförderzeugs (F) versehen ist, wobei das intralogistische System mindestens eine im Betriebsbereich des Flurförderzeugs (F) angebrachte Markierung (1, 2, 3) umfasst, welche die mit definierten Nachrichten an das Flurförderzeug (F) codierten Informationen enthält, und die Datenverarbeitungseinrichtung (VC) dazu eingerichtet ist, durch Auswertung dieser Nachrichten die Handlungsanweisungen und/oder Steuerungsbefehle zu erstellen, wobei die Markierung (1, 2, 3) derart ausgebildet ist, dass die Nachrichten von einer Betriebsperson und/oder einem Steuerungssystem aktiv veränderbar sind, wobei zur Veränderung der Nachrichten die Markierung (1, 2, 3) umgeschaltet oder verändert wird, indem Nachrichten von einer Betriebsperson manuell an der Markierung (1, 2, 3) verändert werden oder die Nachrichten von einer zentralen Steuerungseinheit verändert werden.

17. Intralogistisches System nach Anspruch 16, **dadurch gekennzeichnet, dass** das intralogistische System eine, mit der Markierung (1, 2, 3) in Wirkverbindung stehende, zentrale Steuerungseinheit umfasst, in der die Nachrichten erzeugt werden.

18. Intralogistisches System nach Anspruch 16 oder 17, **dadurch gekennzeichnet, dass** die Markierung (1, 2, 3) auf einem Fahrboden und/oder an mindestens einer Wand und/oder an mindestens einem Tor und/oder an mindestens einem Pfosten und/oder an mindestens einer Decke in der Betriebsumgebung des Flurförderzeugs angeordnet ist.

## Claims

1. Method for operating an industrial truck (F) having at least one optical sensor (C1, C2, C3) for identifying information in the operating region of the industrial truck (F) and a data processing device (VC) for evaluating this information and for creating instructions and/or control commands appropriate to the situation for the operation of the industrial truck (F), wherein the optical sensor (C1, C2, C3) detects at least one marking (1, 2, 3) made in the operating region of the industrial truck (F) and containing the information coded with defined messages to the industrial truck (F), and the data processing device (VC) creates the instructions and/or control commands by evaluating these messages, wherein the messages can be actively changed by an operator and/or a control system, wherein in order to change the messages the marking (1, 2, 3) is switched over or changed by way of messages being changed manually on the marking (1, 2, 3) by an operator or the messages being changed by a central control unit.

2. Method according to Claim 1, **characterized in that** a camera (C1, C2, C3) is used as the optical sensor (C1, C2, C3).

3. Method according to Claim 1 or 2, **characterized in that** the messages can be changed by mechanically influencing the marking (1, 2, 3).

4. Method according to Claim 3, **characterized in that** the marking (1, 2, 3) used is a reversible display plate which is coded with different messages on its front side and rear side.

5. Method according to Claim 3, **characterized in that** the marking (1, 2, 3) used is a display board with mechanically foldable display elements.

6. Method according to Claim 3, **characterized in that** the marking (1, 2, 3) used is a display board with messages printed on films, wherein films with different messages can be mechanically selected.

7. Method according to Claim 1 or 2, **characterized in that** the messages can be changed by electronically influencing the marking (1, 2, 3).

8. Method according to Claim 7, **characterized in that** the marking (1, 2, 3) used is a monitor on which the different messages can be electronically displayed.

9. Method according to Claim 7, **characterized in that** the marking (1, 2, 3) used is a projection image produced by a light projector and on which the different messages can be electronically displayed.

10. Method according to Claim 7, **characterized in that** the marking (1, 2, 3) used is a light-emitting diode matrix display on which the different messages can be displayed by targeted activation of individual light-emitting diodes.

11. Method according to one of Claims 1 to 10, **characterized in that** the messages are changed by means of remote control.

12. Method according to one of Claims 1 to 11, **characterized in that** the marking (1, 2, 3) contains information which is not noticeable to operators.

13. Method according to Claim 12, **characterized in that** the information uses electromagnetic radiation which is not visible to the human eye and has wavelengths that are shorter or longer than that of visible light.

14. Method according to Claim 12 or 13, **characterized in that** the information uses alternating frequencies lying outside the temporal resolution capability of the human eye.

15. Method according to one of Claims 1 to 14, **characterized in that** the information coded with the defined messages contains a sequence of image information.

16. Intralogistic system comprising at least one industrial truck (F) which is provided with at least one optical sensor (C1, C2, C3) for identifying information in the operating region of the industrial truck (F) and a data processing device (VC) for evaluating this information and for creating instructions and/or control commands appropriate to the situation for the operation the industrial truck (F), wherein the intralogistic system comprises at least one marking (1, 2, 3) made in the operating region of the industrial truck (F) and containing the information coded with defined messages to the industrial truck (F), and the data processing device (VC) is designed to create the instructions and/or control commands by evaluating these messages, wherein the marking (1, 2, 3) is configured in such a way that the messages can be actively changed by an operator and/or a control system, wherein in order to change the messages the marking (1, 2, 3) is switched over or changed by way of messages being changed manually on the marking (1, 2, 3) by an operator or the messages being changed by a central control unit.

17. Intralogistics system according to Claim 16, **characterized in that** the intralogistics system comprises a central control unit which is operatively connected to the marking (1, 2, 3) and in which the messages are generated.

18. Intralogistics system according to Claim 16 or 17, **characterized in that** the marking (1, 2, 3) is arranged on a floor surface and/or on at least one wall and/or on at least one door and/or on at least one pillar and/or on at least one ceiling in the operating environment of the industrial truck.

## Revendications

1. Procédé de fonctionnement d'un convoyeur au sol (F) pourvu d'au moins un capteur optique (C1, C2, C3) destiné à détecter des informations dans la zone de fonctionnement du convoyeur au sol (F) et un dispositif de traitement de données (VC) destiné à évaluer ces informations et créer des consignes de manipulation et/ou des instructions de commande spécifiques à la situation afin de faire fonctionner le convoyeur au sol (F), le capteur optique (C1, C2, C3) détectant au moins un marquage (1, 2, 3) qui est appliqué dans la zone de fonctionnement du convoyeur au sol (F) et qui contient les informations codées avec des messages définis à destination du convoyeur au sol (F), et le dispositif de traitement de données (VC) créant les consignes de manipulation et/ou les instructions de commande par évaluation de ces messages, les messages pouvant être activement modifiés par un opérateur et/ou un système de commande, le marquage (1, 2, 3) étant commuté ou modifié afin de modifier les messages en ce que des messages sont modifiés manuellement par un opérateur sur le marquage (1, 2, 3) ou les messages étant modifiés par une unité de commande centrale.

2. Procédé selon la revendication 1, **caractérisé en ce qu'**une caméra (C1, C2, C3) est utilisée comme capteur optique (C1, C2, C3).

3. Procédé selon la revendication 1 ou 2, **caractérisé en ce que** les messages peuvent être modifiés par une influence mécanique sur le marquage (1, 2, 3).

4. Procédé selon la revendication 3, **caractérisé en ce que** l'on utilise comme marquage (1, 2, 3) une plaque d'affichage réversible qui est codée recto et verso avec des messages différents.

5. Procédé selon la revendication 3, **caractérisé en ce que** l'on utilise comme marquage (1, 2, 3) un tableau d'affichage pourvu d'éléments d'affichage repliables mécaniquement.

6. Procédé selon la revendication 3, **caractérisé en ce que** l'on utilise comme marquage (1, 2, 3) un panneau d'affichage pourvu de messages imprimés sur des films, des films pourvus de différents messages étant sélectionnables mécaniquement.

7. Procédé selon la revendication 1 ou 2, **caractérisé en ce que** les messages peuvent être modifiés par influence électronique sur le marquage (1, 2, 3).

8. Procédé selon la revendication 7, **caractérisé en ce que** l'on utilise comme marquage (1, 2, 3) un moniteur sur lequel les différents messages peuvent être affichés électroniquement.

9. Procédé selon la revendication 7, **caractérisé en ce que** l'on utilise comme marquage (1, 2, 3) une image de projection qui est générée par un projecteur de lumière et sur laquelle les différents messages peuvent être affichés électroniquement.

10. Procédé selon la revendication 7, **caractérisé en ce qu'**on utilise comme repère (1, 2, 3) un afficheur matriciel à diodes électroluminescentes sur lequel les différents messages peuvent être affichés par activation ciblée de diodes électroluminescentes individuelles.

11. Procédé selon l'une des revendications 1 à 10, **caractérisé en ce que** les messages sont modifiés au moyen d'une télécommande.

12. Procédé selon l'une des revendications 1 à 11, **caractérisé en ce que** le marquage (1, 2, 3) contient des informations non perceptibles par des opérateurs.

13. Procédé selon la revendication 12, **caractérisé en ce que** les informations utilisent un rayonnement électromagnétique invisible pour l'homme et de longueurs d'onde plus courtes ou plus longues que celles de la lumière visible.

14. Procédé selon la revendication 12 ou 13, **caractérisé en ce que** les informations utilisent des fréquences alternatives qui sont en dehors de la capacité de résolution temporelle de l'œil humain.

15. Procédé selon l'une des revendications 1 à 14, **caractérisé en ce que** les informations codées avec les messages définis comportent une séquence d'informations d'image.

16. Système intralogistique comprenant au moins un convoyeur au sol (F) pourvu d'au moins un capteur optique (C1, C2, C3) destiné à détecter des informations dans la zone de fonctionnement du convoyeur au sol (F) et un dispositif de traitement de données (VC) destiné à évaluer ces informations et créer des consignes de manipulation et/ou des instructions de commande spécifiques à la situation afin de faire fonctionner le convoyeur au sol (F), le système intralogistique comprenant au moins un marquage (1, 2, 3) qui est appliqué dans la zone de fonctionnement du convoyeur au sol (F) et qui contient les informations codées avec des messages définis à destination du convoyeur au sol (F), et le dispositif de traitement de données (VC) étant conçu pour créer les consignes de manipulation et/ou les instructions de commande par évaluation de ces messages, le marquage (1, 2, 3) étant conçu de manière à ce que les messages puissent être activement modifiés par un opérateur et/ou un système de commande, le marquage (1, 2, 3) étant commuté ou modifié afin de modifier les messages en ce que les messages sont modifiés manuellement sur le marquage (1, 2, 3) par un opérateur ou les messages sont modifiés par une unité de commande centrale.

17. Système intralogistique selon la revendication 16, **caractérisé en ce que** le système intralogistique comprend une unité de commande centrale qui est reliée fonctionnellement au marquage (1, 2, 3) et dans laquelle les messages sont générés.

18. Système intralogistique selon la revendication 16 ou 17, **caractérisé en ce que** le marquage (1, 2, 3) est disposé sur un sol mobile et/ou sur au moins une paroi et/ou sur au moins un portail et/ou sur au moins un poteau et/ou sur au moins un plafond dans l'environnement d'exploitation du convoyeur au sol.
